# EUROPÄISCHE PATENTSCHRIFT

(11) **EP 0 377 152 B1**
(45) Veröffentlichungstag und Bekanntmachung des Hinweises auf die Patenterteilung: **04.05.1994**
(21) Anmeldenummer: 89123179.7
(22) Anmeldetag: 14.12.1989
(51) Int. Cl.: F16B 21/16

(54) **Lagerbolzenanordnung**
Bearing bolt assembly
Configuration de boulon à coussinet

(30) Priorität: 03.01.1989 DE 3900067
(43) Veröffentlichungstag der Anmeldung: 11.07.1990
(73) Patentinhaber: Volkswagen Aktiengesellschaft, 38436 Wolfsburg (DE)
(72) Erfinder: Reinhold, Norbert, D-3180 Wolfsburg 21 (DE); Klopp, Horst, D-3212 Isenbüttel (DE)

(56) Entgegenhaltungen:
- EP-A- 0 133 596
- DE-A- 3 332 082
- US-A- 1 752 544

## Beschreibung

Die Erfindung betrifft eine Lagerbolzenanordnung der im Oberbegriff des Patentanspruchs 1 genannten Art.

Lagerbolzenanordnungen werden in der Technik überall dort benötigt, wo ein Betätigungshebel oder ein Betätigungspedal, beispielsweise ein Kfz-Kupplungs- oder Bremspedal um eine Lagerachse verschwenkt werden soll.

Üblicherweise besteht eine solche Lagerbolzenanordnung aus dem eigentlichen Lagerbolzen, der verdrehfest an einem ortsfesten Trägerteil befestigt ist, und einer den Betätigungshebel bzw. das Betätigungspedal tragenden Lagerhülse, die axialspielfrei und möglichst reibungsarm verdrehbar auf dem Lagerbolzen gelagert ist.

Eine verdrehfeste Lagerung des Lagerbolzens ist Voraussetzung für eine lange Lebensdauer der Lageranordnung und für definierte Lagerverhältnisse; wäre der Lagerbolzen nicht verdrehfest gelagert und könnte er sich somit beim Betätigen des Betätigungspedals undefiniert mitdrehen, käme es schnell zu spürbaren Verschleißerscheinungen im Befestigungsbereich des Lagerbolzens und zu einer entsprechenden Verkürzung der Lebensdauer der Lagerbolzenanordnung sowie zu undefinierten Lagerverhältnissen.

Im allgemeinen wird ein Lagerbolzen an einer Lagerkonsole o. ä. mit zwei im Abstand zueinander angeordneten plattenförmigen Lagerwangen befestigt. Der an einem Ende mit einem festen Bund oder Kopf versehene Lagerbolzen wird durch Lageröffnungen der Lagerwangen hindurchgesteckt und an seinem anderen Ende mit der Lagerkonsole fest verschraubt, so daß der Lagerbolzen mit den beiden Lagerwangen verdrehfest verspannt ist. Eventuell vorhandenes axiales Spiel der auf dem Lagerbolzen gelagerten Lagerhülse wird durch einen ebenfalls auf dem Lagerbolzen gelagerten axial federnden Federring o. ä. ausgeglichen.

Bekannt sind auch Lagerbolzenanordnungen, bei denen der Lagerbolzen an seinem mit einem Bund versehenen einen Ende eine Rändelung trägt, die bei der Bolzenmontage mit Formschluß in die zugehörige Lagerwange gepreßt wird, wodurch ebenfalls eine verdrehfeste Befestigung des Lagerbolzens erzielt wird. Auf das mit einer Ringnut versehene freie andere Ende des Lagerbolzens wird eine Sicherungsklammer aus Federblech, z. B. nach Art der DE-A-33 32 082, aufgeschoben, durch welche die auf dem Lagerbolzen gelagerte Lagerhülse axial gesichert und außerdem axiales Spiel ausgeglichen wird.

Beide bekannten Anordnungen haben sich in der Praxis durchaus bewährt. Trotzdem lassen sie z. T. montagetechnische oder funktionelle Wünsche offen. Schraubverbindungen sind montagetechnisch vergleichsweise aufwendig; durch Rändelung hergestellter Verdreh-Formschluß nicht immer ausreichend dauerhaft.

Der Erfindung liegt daher die Aufgabe zugrunde, eine Lagerbolzenanordnung der im Oberbegriff des Patentanspruchs 1 genannten Art zu schaffen, die konstruktiv einfach und montagefreundlich ist und auf Dauer definierte Lagerverhältnisse gewährleistet.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Bei der beanspruchten Lagerbolzenanordnung wird der Lagerbolzen nicht unmittelbar mit der plattenförmigen Lagerwange verdrehfest verbunden, sondern mittelbar über eine Sicherungsklammer, welche zum einen axiales Spiel zwischen Lagerbolzen und Lagerhülse ausgleicht und die Lagerbolzen/Lagerhülsen-Anordnung axial sichert und zum anderen bewirkt, daß der Lagerbolzen nicht relativ zu den Lagerwangen verdreht werden kann.

Anhand eines in der Zeichnung dargestellten Ausführungsbeispieles wird die Erfindung nachstehend näher erläutert.

In der Zeichnung zeigen
- Fig. 1: eine Schnittdarstellung einer Lagerbolzenanordnung gemäß der Erfindung,
- Fig. 2: ein erstes Detail dieser Anordnung im Schnitt,
- Fig. 3: ein zweites Detail dieser Anordnung im Schnitt und
- die Figuren 4 bis 6: die Haupt- sowie zwei Seitenansichten der eingesetzten Sicherungsklammer.

Die Lagerbolzenanordnung enthält im wesentlichen einen in einer raumfesten Lagerkonsole mit zwei beabstandeten plattenförmigen Lagerwangen 1 gelagerten Lagerbolzen 2, eine auf diesem drehbar gelagerte Lagerhülse 3 eines Betätigungspedals 16 sowie eine etwa Z-förmige Sicherungsklammer 4 aus Federblech.

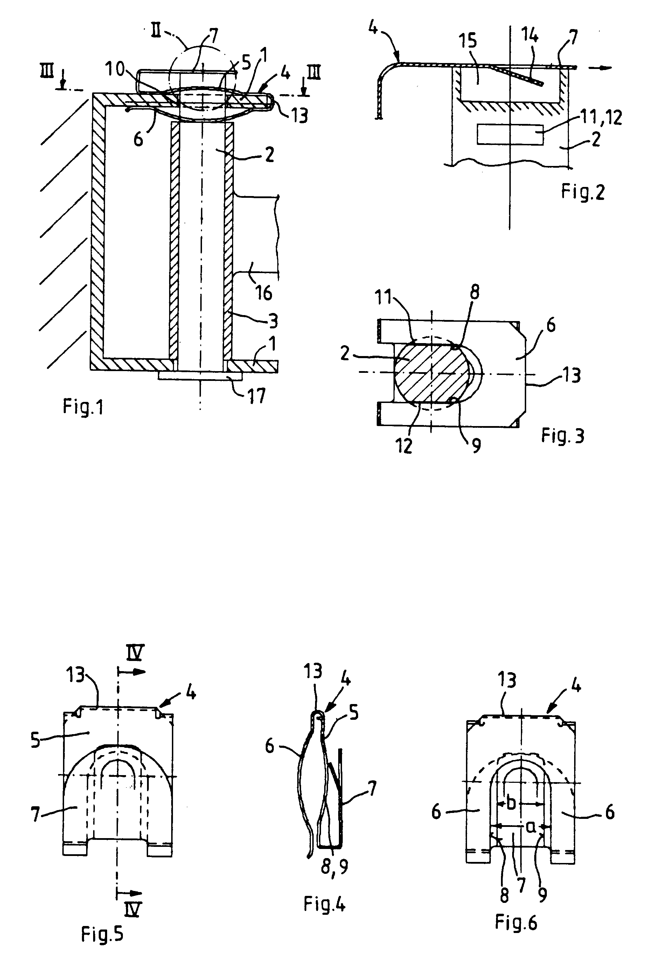

Der an seinem einen Ende in üblicher Weise mit einem Bund 17 versehene Lagerbolzen 2 ist durch Öffnungen der Lagerwangen 1 hindurchgesteckt, wobei zumindest die dem bundlosen Ende des Lagerbolzens 2 zugeordnete Öffnung 10 im Randbereich des Trägerteils bzw. der Lagerwange 1 angeordnet ist. Im außenliegenden Bereich des durch die Öffnung 10 der Lagerwange 1 hindurchgeführten Endes des Lagerbolzens 2 sind zwei diametrale, d. h. auf einander gegenüberliegenden Mantellinien des Lagerbolzens liegende Quernuten 11 und 12 mit parallel zueinander verlaufenden Nutgründen angeordnet, wie in Fig. 3 dargestellt.

Die in ihrem Grundaufbau bekannten Sicherungsklammern, etwa der Art der DE-A-33 32 082 oder der US-A-32 59 006, entsprechende etwa Z-förmige Sicherungsklammer 4 aus Federblech besitzt - wie insbesondere die Figuren 4 bis 6 erkennen lassen - drei etwa parallel zueinander verlaufende Federschenkel 5, 6 und 7, von denen der mittlere und ein äußerer jeweils mit nicht weiter bezifferten, etwa U-förmigen Aussparungen versehen sind, wobei der lichte Abstand a der beiden U-Schenkel des äußeren Federschenkels 6 zumindest etwas größer bemessen ist als der Durchmesser des Lagerbolzens 2 und die lichte Weite b der U-Schenkel des mittleren Federschenkels 5 kleiner als der Durchmesser des Lagerbolzens aber zumindest etwas größer als der Abstand der Nutgründe der beiden Quernuten 11 und 12 des Lagerbolzens ist.

Die Sicherungsklammer ist derart radial auf das bundlose Ende des Lagerbolzens 2 aufgeschoben, daß ihr mittlerer erster sowie ihr äußerer dritter Federschenkel 5 bzw. 7 auf der dem Lagerbolzenende zugekehrten Seite und ihr äußerer zweiter Federschenkel 6 auf der der Lagerhülse 3 zugekehrten Seite der Lagerwange 1 liegen. Dabei greift der mittlere Federschenkel 5 mit durch seine U-Schenkel gebildeten parallelen Führungsflächen 8, 9 radial in die beiden Quernuten 11, 12 ein, während der äußere zweite Federschenkel 6 axial federnd an der Stirnseite der Lagerhülse 3 und der äußere dritte Federschenkel 7 axial federnd an der Stirnseite des Lagerbolzenendes anliegen. Lagerbolzen 2 und Lagerhülse 3 sind dadurch in der Lagerkonsole axial spielfrei gelagert und axial gesichert.

Der den Rand der Lagerwange 1 umgreifende und den mittleren ersten Federschenkel 5 mit dem äußeren zweiten Federschenkel 6 verbindende Federrücken 13 der Sicherungsklammer 4 ist so bemessen, daß er möglichst spielfrei am Lagerwangenrand anliegt. Durch diese Anordnung und Bemessung des Federrückens 13 einerseits und die vorerwähnte Anordnung und Bemessung der beiden Quernuten 11, 12 des Lagerbolzens 2 sowie der beiden Führungsflächen 8, 9 des mittleren Federschenkels 5 andererseits ist der Lagerbolzen 2 in der Öffnung 10 der Lagerwange 1 auch verdrehfest fixiert, so daß die angestrebten verschleißfreien und definierten Lagerverhältnisse auch ohne Verschraubung oder formschlüssiges Einpressen des Lagerbolzens verwirklicht werden. Hierbei ist vorausgesetzt, daß der vom Federrücken 13 umgriffene Rand der Lagerwange 1 zumindest streckenweise eine nicht kreisförmige Kontur aufweist, zumindest aber eine Kreiskontur mit einem von der Längsachse des Lagerbolzens 2 vergleichsweise weit entfernt liegenden Krümmungsmittelpunkt.

Um die Sicherungsklammer 4 gegen ein ungewolltes radiales Abziehen zu sichern, ist ihr an der Stirnseite des Lagerbolzenendes axial federnd anliegender äußerer Federschenkel 7 mit einer aus seiner Schenkelebene zum Lagerbolzen 2 hin abgebogenen Federzunge 14 versehen, welche in eine stirnseitige Ausnehmung 15 des Lagerbolzens greift. Die Sicherungsklammer 4 kann daher nur dann - z. B. zwecks Demontage der Lagerbolzenanordnung - in Pfeilrichtung (Fig. 2) vom Lagerbolzen 2 abgezogen werden, wenn der äußere dritte Federschenkel 7 zuvor so weit axial vom Lagerbolzen 2 fortgedrückt wird, daß die Federzunge 14 nicht mehr in die Ausnehmung 15 des Lagerbolzens hineinragt.

Bei der vorgeschlagenen Lagerbolzenanordnung übernimmt die Sicherungsklammer 4 nicht nur die übliche Funktion eines Axialspielausgleichs und einer Axialsicherung, sondern zusätzlich noch die der Verdrehsicherung des Lagerbolzens 2 relativ zur Lagerwange 1 der Lagerkonsole.

Bei der im Ausführungsbeispiel dargestellten Lagerbolzenanordnung besitzt der Lagerbolzen an seinem einen Ende einen üblichen Lagerbund 17. Die vorgeschlagene Anordnung ist mit Vorteil aber auch in solchen Anwendungsfällen einsetzbar, in denen ein solcher fester Bolzenbund stört, z. B. in den Fällen, in denen der Lagerbolzen bei der Montage oder Demontage - aus welchen Gründen auch immer - axial in beiden Richtungen verschoben werden muß. In einem solchen Falle könnte ein bundloser Bolzen Verwendung finden, der an seinem einen Ende in der vorgeschlagenen Weise ausgebildet und verdrehfest an der zugeordneten Lagerwange der Lagerkonsole montiert wird, während auf seinem anderen Ende ein üblicher, in einer Ringnut eingreifender Sicherungsring befestigt wird, erforderlichenfalls unter Verwendung einer üblichen spielausgleichenden Federscheibe oder Federklammer.

## Patentansprüche

1. Lagerbolzenanordnung mit einem zumindest mit seinem einen Ende an einem plattenförmigen o. ä. Trägerteil (1), insbesondere an einer Lagerwange befestigten Lagerbolzen (2) und mit einer auf diesem axialspielfrei verdrehbar gelagerten Lagerhülse (3) o. ä., unter Verwendung einer radial auf den Lagerbolzen (2) aufgeschobenen etwa Z-förmigen Sicherungsklammer (4) aus Federblech mit drei etwa parallel zueinander verlaufenden Federschenkeln (5, 6, 7), von denen der mittlere erste (5) mit zwei einander gegenüberliegenden parallelen Führungsflächen (8, 9) - sich axial abstützend - radial in einer Quernut (11, 12) des Lagerbolzens (2) eingreift, der äußere zweite (6) axial federnd an der Stirnseite der Lagerhülse (3) anliegt und der äußere dritte (7) mit seinem freien Endbereich in einer ein radiales Abziehen der Sicherungsklammer (4) verhindernden Weise am Lagerbolzen (2) anliegt,
dadurch gekennzeichnet, daß das Ende des Lagerbolzens (2) durch eine im Randbereich des Trägerteils (1) befindliche Öffnung (10) hindurchgeführt ist,
daß der mittlere erste sowie der äußere dritte Federschenkel (5, 7) der Sicherungsklammer (4) auf der dem Lagerbolzenende zugekehrten Seite und der äußere zweite Federschenkel (6) auf der der Lagerhülse (3) zugekehrten Seite des Trägerteils (2) liegen, daß in dem durch die Öffnung (10) hindurchgeführten Bereich des Lagerbolzenendes zwei diametrale Quernuten (11, 12) mit parallel zueinander verlaufenden Nutgründen angeordnet sind, in die der mittlere Federschenkel (5) mit seinen damit korrespondierenden parallelen Führungsflächen (8, 9) eingreift, und daß der den Rand des Trägerteils (1) umgreifende und den mittleren ersten mit dem äußeren zweiten Federschenkel (5, 6) verbindende Federrücken (13) zumindest entlang eines Teils seiner Rückenlänge am Trägerteil (1) anliegt.

2. Lagerbolzenanordnung nach Anspruch 1,
dadurch gekennzeichnet, daß der äußere dritte Federschenkel (7) axial federnd an der Stirnseite des Lagerbolzenendes anliegt und mit einer aus der Schenkelebene zum Lagerbolzen (2) hin abgebogenen Federzunge (14) in eine stirnseitige Ausnehmung (15) des Lagerbolzens (2) greift.

## Claims

1. A bearing pin arrangement having a bearing pin (2) fixed at least with one of its ends to a plate-shaped or similar carrying part (1), in particular to a bearing end piece, and having a bearing sleeve (3) or similar rotatably mounted on this bearing pin (2) in a manner free from axial play, using a securing clip (4), which is pushed onto the bearing pin (2), is approximately Z-shaped and is made of spring plate, having three resilient limbs (5, 6, 7) extending approximately parallel to each other, of which the middle first resilient limb (5) having two parallel guide surfaces (8, 9) lying opposite to each other radially engages - in an axially supporting manner - a transverse groove (11, 12) of the bearing pin (2), the outer second resilient limb (6) lies against the front face of the bearing sleeve (3) in an axially resilient manner and the outer third resilient limb (7) lies with its free end region against the bearing pin (2) in a manner that hinders the securing clip (4) from being drawn out radially,
characterised in that the end of the bearing pin (2) is guided through an opening (10) situated in the edge region of the carrying part (1),
that the middle first resilient limb (5) as well as the outer third resilient limb (7) of the securing clip (4) lie on the side of the carrying part (2) facing towards the end of the bearing pin and the outer second resilient limb (6) lies on the side of the carrying part (2) facing towards the bearing sleeve (3),
that in the region of the end of the bearing pin guided through the opening (10) two diametrical transverse grooves (11, 12) are disposed, having groove bases extending parallel to each other, which are engaged by the middle resilient limb (5) with its parallel guide surfaces (8, 9) corresponding thereto,
and that the resilient back (13) which encompasses the edge of the carrying part (1) and connects the middle first to the outer second resilient limb (5, 6), lies at least along a part of the length of its back against the carrying part (1).

2. A bearing pin arrangement according to claim 1,
characterised in that the outer third resilient limb (7) lies against the front face of the end of the bearing pin in an axially resilient manner and with a resilient tongue (14) bent from the plane of the limb in towards the bearing pin (2) engages a front face side recess (15) of the bearing pin (2).

## Revendications

1. Agencement de goujon d'appui, comprenant un goujon d'appui (2) fixé au moins par l'une des ses extrémités à une pièce porteuse (1) en forme de plaque ou analogue, en particulier à un flasque d'appui, et comprenant un manchon d'appui (3) ou analogue monté sans jeu axial et avec possibilité de rotation sur ledit goujon d'appui (2) en utilisant une agrafe de blocage (4) sensiblement en forme de Z en tôle élastique qui est emmanchée radialement sur le goujon d'appui (2) et qui comporte trois branches élastiques (5, 6, 7) qui sont sensiblement parallèles entre elles et dont la première branche médiane (5) S'engage radialement - en y prenant appui axialement - dans une rainure transversale (11, 12) du goujon d'appui (2) au moyen de deux surfaces de guidage parallèles (8, 9) situées l'une en face de l'autre, la deuxième branche élastique extérieure (6) prend appui axialement de manière élastique sur la face frontale du manchon d'appui (3), et la troisième branche élastique extérieure (7) prend appui, avec sa zone extrême libre, sur le goujon d'appui (2) de manière à empêcher un retrait radial de l'agrafe de blocage (4), caractérisé en ce que l'extrémité du goujon d'appui (2) traverse une ouverture (10) située dans la zone de bord de la pièce porteuse (1), en ce que la première branche élastique médiane (5) et la troisième branche élastique extérieure (7) de l'agrafe de blocage (4) se trouvent sur le côté de la pièce porteuse (1) tourné vers l'extrémité du goujon d'appui et la deuxième branche élastique extérieure (6) se trouve sur le côté de la pièce porteuse (1) tourné vers le manchon d'appui (3), en ce que dans la zone de l'extrémité du goujon d'appui engagée dans l'ouverture (10) sont pratiquées deux rainures transversales (11, 12) qui sont diamétralement opposées et qui comportent des fonds de rainures parallèles l'un à l'autre dans lesquels s'engage la branche élastique médiane (5) avec ses surfaces de guidage parallèles correspondantes (8, 9), et en ce que le dos élastique (13) qui enserre le bord de la pièce porteuse (1) et relie la première branche élastique médiane (5) à la deuxième branche élastique extérieure (6) repose sur la pièce porteuse (1) au moins le long d'une partie de sa longueur de dos.

2. Agencement de goujon d'appui selon la revendication 1, caractérisé en ce que la troisième branche élastique extérieure (7) prend appui axialement de manière élastique sur la face frontale de l'extrémité du goujon d'appui et s'engage dans un évidement (15) de la face frontale du goujon d'appui (2) avec une languette élastique (14) qui est pliée en direction du goujon d'appui (2) en s'écartant du plan de la branche.
